# EUROPÄISCHE PATENTSCHRIFT

(11) **EP 1 824 904 B1**
(45) Veröffentlichungstag und Bekanntmachung des Hinweises auf die Patenterteilung: **05.11.2008**
(21) Anmeldenummer: 05813858.7
(22) Anmeldetag: 17.11.2005
(51) Int. Cl.: C08G 77/26

(54) **ALKOXYSILANTERMINIERTE PREPOLYMERE**
ALKOXYSILANE-TERMINATED PREPOLYMERS
PREPOLYMERES A TERMINAISON ALCOXYSILANE

(30) Priorität: 09.12.2004 DE 102004059379
(43) Veröffentlichungstag der Anmeldung: 29.08.2007
(73) Patentinhaber: Wacker Chemie AG, 81737 München (DE)
(72) Erfinder: BRIEHN, Christoph, 81369 München (DE); STANJEK, Volker, 81477 München (DE); WEIDNER, Richard, 84489 Burghausen (DE); KINZLER, Carolin, 81373 München (DE)
(74) Vertreter: Fritz, Helmut
(86) Internationale Anmeldenummer: PCT/EP2005/012330
(87) Internationale Veröffentlichungsnummer: WO 2006/061090

(56) Entgegenhaltungen:
- WO-A-20/05000931
- DE-A1- 10 237 271

## Beschreibung

Die Erfindung betrifft Prepolymere, erhältlich unter Einsatz von aminomethylfunktionellen Alkoxysilanen, Verfahren zu deren Herstellung sowie Massen enthaltend diese Prepolymere.

Prepolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilanterminierten Prepolymere bereits bei Raumtemperatur in der Lage, unter Abspaltung der Alkoxygruppen und Ausbildung von Si-O-Si-Bindungen miteinander zu kondensieren. Somit lassen sich diese Prepolymere u.a. als einkomponentige an der Luft härtende Systeme verwenden, welche den Vorteil einer einfachen Handhabung besitzen, da keine zweite Komponente zudosiert und eingemischt werden muß.

Ein weiterer Vorteil von alkoxysilanterminierten Prepolymeren besteht in der Tatsache, daß bei der Härtung weder Säuren noch Oxime oder Amine freigesetzt werden. Anders als bei Kleb- oder Dichtstoffen auf Isocyanatbasis entsteht auch kein CO₂, das als gasförmige Komponente zu einer Blasenbildung führen kann. Anders als isocyanatbasierende Systeme sind alkoxysilanterminierte Prepolymermischungen auch toxikologisch unbedenklich.

Je nach Gehalt an Alkoxysilangruppen und deren Aufbau bilden sich bei der Härtung dieses Prepolymertyps hauptsächlich langkettige Polymere (Thermoplaste), relativ weitmaschige dreidimensionale Netzwerke (Elastomere) oder aber hochvernetzte Systeme (Duroplaste).

Alkoxysilanfunktionelle Prepolymere können aus unterschiedlichen Bausteinen aufgebaut sein. Sie besitzen üblicherweise ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in US 6,207,766 und US 3,971,751. Daneben sind aber auch Systeme weit verbreitet, deren Rückgrat ganz oder zumindest zum Teil aus Organosiloxanen besteht, beschrieben u.a. in US 5,254,657.

Von zentraler Bedeutung bei der Prepolymerherstellung sind jedoch die monomeren Alkoxysilane, über die das Prepolymer mit den erforderlichen Alkoxysilanfunktionen ausgestattet wird. Dabei können prinzipiell die unterschiedlichsten Silane und Kupplungsreaktionen zum Einsatz kommen, z.B. eine Addition von Si-H-funktionellen Alkoxysilanen an ungesättigte Prepolymere oder eine Copolymerisation von ungesättigten Organosilanen mit anderen ungesättigten Monomeren.

Bei einem anderen Verfahren werden alkoxysilanterminierte Prepolymere durch Umsatz von OH-funktionellen Prepolymeren mit isocyanatfunktionellen Alkoxysilanen hergestellt. Derartige Systeme sind beispielsweise in US 5,068,304 beschrieben. Die resultierenden Prepolymere zeichnen sich oftmals durch besonders positive Eigenschaften aus, z.B. durch eine sehr gute Mechanik der ausgehärteten Massen. Nachteilig ist jedoch die aufwendige und kostenintensive Herstellung der isocyanatfunktionellen Silane sowie die Tatsache, daß diese Silane toxikologisch äußerst bedenklich sind.

Günstiger ist hier oftmals ein Herstellungsverfahren für alkoxysilanterminierte Prepolymere, bei dem von Polyolen, z.B. von Polyether- oder Polyesterpolyolen, ausgegangen wird. Diese reagieren in einem ersten Reaktionsschritt mit einem Überschuß eines Di- oder Polyisocyanates. Anschließend werden die dabei erhaltenen isocyanatterminierten Prepolymere mit einem aminofunktionellen Alkoxysilan zu dem gewünschten alkoxysilanterminierten Prepolymer umgesetzt. Derartige Systeme sind beispielsweise in EP 1 256 595 oder EP 1 245 601 beschrieben. Die Vorteile dieser Systems liegen vor allem in den besonders positiven Eigenschaften der resultierenden Prepolymere. So zeichnen sich diese beispielsweise meist durch eine gute Reißfestigkeit der ausgehärteten Massen aus, die - zumindest teilweise - auf die in diesen Polymeren enthaltenen Urethan- und Harnstoffeinheiten und deren Fähigkeit zur Ausbildung von Wasserstoffbrückenbindungen zurückzuführen ist. Ein weiterer Vorteil dieser Prepolymersysteme stellt die Tatsache dar, daß die als Edukte benötigten aminofunktionellen Silane durch einfache und preisgünstige Verfahren zugänglich und toxikologisch weitgehend unbedenklich sind.

Nachteilig an den meisten bekannten und derzeit verwendeten Systemen ist jedoch deren nur mäßige Reaktivität gegenüber Feuchtigkeit, sowohl in Form von Luftfeuchtigkeit als auch in Form von - gegebenenfalls zugesetztem - Wasser. Um auch bei Raumtemperatur eine hinreichende Härtungsgeschwindigkeit zu erreichen, ist daher der Zusatz eines Katalysators unbedingt erforderlich. Das ist vor allem deshalb problematisch, da die in der Regel als Katalysatoren eingesetzten zinnorganischen Verbindungen toxikologisch bedenklich sind. Zudem enthalten die Zinnkatalysatoren oftmals auch noch Spuren hochtoxischer Tributylzinnderivate.

Besonders problematisch ist die relativ geringe Reaktivität der alkoxysilanterminierten Prepolymersysteme, wenn keine Methoxysilylterminierungen sondern die nochmals unreaktiveren Ethoxysilylterminierungen verwendet werden. Gerade ethoxysilylterminierte Prepolymere wären jedoch in vielen Fällen besonders vorteilhaft, weil bei ihrer Aushärtung lediglich Ethanol als Spaltprodukt freigesetzt wird.

Um Probleme mit toxischen Zinnkatalysatoren zu vermeiden, wurde bereits nach zinnfreien Katalysatoren gesucht. Denkbar sind hier vor allem titan-haltige Katalysatoren, z.B. Titantetraisopropoxylat oder Bis-(acetylacetonato)-diisobutyltitanat, die beispielsweise beschrieben sind in EP 0 885 933. Allerdings besitzen diese Titankatalysatoren den Nachteil, daß sie meist nicht in Kombination mit stickstoffhaltigen Verbindungen eingesetzt werden können, da letztere hier als Katalysatorgifte wirken. Der Einsatz von stickstoffhaltigen Verbindungen, z.B. als Haftvermittler, ist in vielen Fällen jedoch unvermeidbar. Zudem dienen Stickstoffverbindungen, z.B. Aminosilane, in vielen Fällen als Edukte bei der Herstellung der silanterminierten Prepolymere, so daß sie als kaum vermeidbare Verunreinigungen auch in Prepolymeren selbst enthalten sind.

Einen großen Vorteil können daher alkoxysilanterminierte Prepolymersysteme darstellen, wie sie beispielsweise in DE 101 42 050 oder DE 101 39 132 beschrieben sind. Diese Prepolymere zeichnen sich dadurch aus, daß sie Alkoxysilylgruppen enthalten, die nur durch einen Methylspacer von einem Stickstoffatom mit einem freien Elektronenpaar getrennt sind. Dadurch besitzen diese Prepolymere eine extrem hohe Reaktivität gegenüber (Luft-) Feuchtigkeit, so daß sie zu Prepolymerabmischungen verarbeitet werden können, die ohne metallhaltige Katalysatoren auskommen können, und dennoch bei Raumtemperatur mit z.T. extrem kurzen Klebfreizeiten bzw. mit sehr hoher Geschwindigkeit aushärten. Da diese Prepolymere somit über eine Aminfunktion in α-Position zur Silylgruppe verfügen, werden sie auch als α-alkoxysilanterminierte Prepolymere bezeichnet.

Diese α-alkoxysilanterminierten Prepolymere werden typischerweise durch eine Reaktion eines α-Aminosilans, d.h. eines aminomethylfunktionellen Alkoxysilans, mit einem isocyanatfunktionellen Prepolymer oder einer isocyanatfunktionellen Vorstufe des Prepolymers hergestellt. Gängige Beispiele für α-Aminosilane sind *N*-Cyclohexylaminomethyl-trimethoxysilan, *N*-Cyclohexylaminomethyl-methyldimethoxysilan, *N*-Ethylaminomethyl-trimethoxysilan, *N-*Ethylaminomethyl-methyldimethoxysilan, *N*-Butylaminomethyl-trimethoxysilan, *N*-Cyclohexylaminomethyl-triethoxysilan *N-*Cyclohexylaminomethyl-methyldiethoxysilan etc..

Ein entscheidender Nachteil dieser α-alkoxysilanfunktionellen Systeme ist jedoch die nur mäßige Stabilität der für ihre Synthese benötigten α-Aminosilane. So kann insbesondere die Si-C-Bindung dieser Silane z.T. sehr leicht gespalten werden. Vergleichbar große Stabilitätsprobleme sind bei den herkömmlichen γ-Aminopropyl-alkoxysilanen unbekannt.

Besonders deutlich zeigt sich diese Instabilität der α-Aminosilane in Gegenwart von Alkohol oder Wasser. So wird beispielsweise Aminomethyl-trimethoxysilan in Gegenwart von Methanol innerhalb weniger Stunden quantitativ zu Tetramethoxysilan abgebaut. Mit Wasser reagiert es zu Tetrahydroxysilan bzw. zu höheren Kondensationsprodukten dieses Silans. Entsprechend reagiert Aminomethyl-methyldimethoxysilan mit Methanol zu Methyltrimethoxysilan und mit Wasser zu Methyltrihydroxysilan bzw. zu höheren Kondensationsprodukten dieses Silans. Etwas stabiler sind N-substituierte α-Aminosilane, z.B. N-Cyclohexylaminomethyl-methyldimethoxysilan oder N-Cyclohexylaminomethyl-trimethoxysilan. Doch in Gegenwart von Spuren von Katalysatoren oder sauren sowie basischen Verunreinigungen werden auch diese Silane innerhalb weniger Stunden vom Methanol quantitativ zu N-Methyl-cyclohexylamin und Methyltrimethoxysilan bzw. Tetramethoxysilan abgebaut. Mit Wasser reagieren sie zu *N*-Methyl-cyclohexylamin und Methyltrihydroxysilan bzw. Tetrahydroxysilan oder den höherkondensierten Homologen dieser Silane. Auch die meisten übrigen N-substituierte α-Aminosilane mit sekundärem Stickstoffatom entsprechend des Standes der Technik zeigen dieselbe Abbaureaktion.

Aber auch in Abwesenheit von Methanol oder Wasser sind diese α-Aminosilane nur mäßig stabil. So kann es vor allem bei erhöhten Temperaturen und in Anwesenheit von Katalysatoren oder katalytisch wirksamen Verunreinigungen ebenfalls zu einer Zersetzung der α-Silane unter Spaltung der Si-C-Bindung kommen.

Die nur mäßige Stabilität der α-Aminosilane wirkt sich meist auch deshalb stark nachteilig aus, da diese sich auch unter den Reaktionsbedingungen der Prepolymersynthese zumindest teilweise zersetzen können. Dies erschwert nicht nur die Prepolymersynthese sondern führt in der Regel auch zu einer - zum Teil massiven - Verschlechterung der Polymereigenschaften, da dabei auch Prepolymere entstehen, die nicht mit den Aminosilanen sondern durch deren Zersetzungsprodukte terminiert worden sind.

Etwas stabiler sind lediglich α-Aminosilane mit sekundärem Stickstoffatom, die am Stickstoffatom einen elektronenziehenden Substituenten tragen, wie z.B. N-Phenylaminomethyl-trimethoxysilan oder *O*-Methyl-carbamatomethyl-trimethoxysilan. Jedoch sind die Aminofunktionen dieser Silane auch gegenüber Isocyanatgruppen deutlich weniger reaktiv, weshalb sie zur Herstellung von silanterminierten Prepolymeren aus isocyanatfunktionellen Vorstufen in der Regel ungeeignet sind. So ist das o.g. *O*-Methyl-carbamatomethyl-trimethoxysilan so reaktionsträge, daß auch nach mehrstündigem Kochen dieses Silans mit einem Prepolymer, das über aliphatische Isocyanatgruppen verfügt, praktisch keine Reaktion feststellbar ist. Auch Katalysatoren wie Dibutylzinndilaurat führen dabei zu keiner nennenswerten Verbesserung. Einzig die N-phenylsubstituierten Silane wie *N*-Phenylaminomethyl-trimethoxysilan besitzt gegenüber Isocyanatfunktionen eine gewisse (wenngleich oftmals noch immer unzureichende) Reaktivität. Jedoch reagieren sie dabei zu aromatisch substituierten Harnstoffeinheiten, die Photo-Fries-Umlagerungen eingehen können und somit extrem UVlabil sind. Die entsprechenden Produkte sind somit für die allermeisten Anwendungen gänzlich ungeeignet.

Es bestand somit die Aufgabe, Prepolymere (A) mit einer hohen Reaktivität gegenüber (Luft-)Feuchtigkeit zur Verfügung zu stellen, die aus aminomethylfunktionellen α-Alkoxysilanen hergestellt werden können, die sich einerseits durch eine verbesserte Stabilität auszeichnen, andererseits aber auch hinreichend reaktiv gegenüber isocyanatfunktionellen Vorstufen der Prepolymere (A) sind.

Gegenstand der Erfindung sind alkoxysilanfunktionelle Prepolymere (A) erhältlich durch Einsatz eines aminomethylfunktionellen Alkoxysilans (A1), das über mindestens ein Strukturelement der allgemeinen Formel [1] 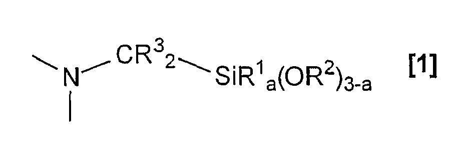 verfügt,
in der
- **R¹**: einen gegebenenfalls substituierten Kohlenwasserstoffrest oder eine =N-CR³₂-Gruppe,
- **R²**: einen Alkylrest mit 1-6 Kohlenstoffatomen oder einen ω-Oxaalkyl-alkylrest mit insgesamt 2-10 Kohlenstoffatomen,
- **R³**: Wasserstoff oder einen gegebenenfalls substituierten Kohlenwasserstoffrest darstellt, und
- **a**: die Werte 0, 1 oder 2 annehmen kann,
wobei es sich bei dem Stickstoffatom in der allgemeinen [1] um ein tertiäres Stickstoffatom handelt und das Alkoxysilan (Al) über mindestens eine weitere gegenüber Isocyanaten reaktive Funktion (F) verfügt.

Überraschenderweise wurde gefunden, daß α-Aminomethylsilane, die in α-Position zur Silylgruppe über ein tertiäres Stickstoffatom verfügen unter den beschriebenen Bedingungen vollständig stabil sind. Die α-Aminosilane (A1) sind deutlich stabiler als herkömmliche α-Aminosilane mit primärer oder sekundärer Aminofunktion in α-Position zur Silylgruppe. So sind beispielsweise die Silane *N*-(Methyldiethoxysilylmethyl)-piperazin, *N*-(Methyldimethoxysilylmethyl)-piperazin oder *N-*(Trimethoxysilylmethyl)-piperazin auch in methanolischer Lösung (10 Gew.-%) über mehrere Wochen stabil.

Herkömmliche aminomethylfunktionelle Alkoxysilane mit primärer oder sekundärer Aminfunktion haben sich unter denselben Bedingungen bereits nach kurzer Zeit weitgehend zersetzt. Im folgenden sind einige typische Halbwertszeiten herkömmliche α-Aminosilane aufgelistet:
Aminomethyl-methyldimethoxysilan: t_{1/2} = 6 h
Cyclohexylaminomethyl-methyldimethoxysilan: t_{1/2} = 1 Woche
Aminomethyl-trimethoxysilan: t_{1/2} = 19 h
Cyclohexylaminomethyl-trimethoxysilan: t_{1/2} = 3 Tage
i-Butylaminomethyl-trimethoxysilan: t_{1/2} = 1 Woche

Die Zersetzung der α-Aminomethylsilane wurde dabei NMR-spektroskopisch detektiert.

Jedoch können herkömmliche α-Aminosilane mit tertiärem Stickstoffatom, wie z.B. *N*,*N*-Diethylaminomethyltrimethoxysilan, *N*,*N*-Dibutylaminomethyl-trimethoxysilan, *N,N-*Diethylaminomethyl-triethoxysilan, N,N-Dibutylaminomethyltriethoxysilan etc., ob der fehlenden NH-Funktion nicht mehr mit isocyanatfunktionellen Vorstufen zu α-alkoxysilanfunktionellen Prepolymeren verarbeitet werden.

Daher liegt der Erfindung zudem die Idee zugrunde, daß zur Prepolymersynthese α-Aminomethylsilane eingesetzt werden, die in α-Position zur Silylgruppe über ein tertiäres Stickstoffatom verfügen, daneben aber mindestens eine weitere gegenüber Isocyanaten reaktive Funktion (F) enthalten.

Die Reste R¹ weisen vorzugsweise 1 bis 12, insbesondere 1 bis 6 C-Atome auf. Sie sind vorzugsweise Alkyl-, Cycloalkyl-, Aryl-oder Arylalkylreste. Als Reste R¹ werden Methyl-, Ethyl- oder Phenylgruppen bevorzugt, besonders bevorzugt die Methylgruppe. Bei den Resten R² handelt es sich bevorzugt um Methyl- oder Ethylgruppen. Die Reste R³ stellen bevorzugt Wasserstoff oder einen gegebenenfalls mit Chlor- oder Fluor substituierten Kohlenwasserstoffrest mit 1 bis 6 C-Atomen dar, insbesondere Wasserstoff. Bei der Funktion (F) handelt es sich bevorzugt um eine NH-, OH- oder SH-Funktion.

Bevorzugt sind Alkoxysilane (A1) der allgemeinen Formeln [2] und [3] 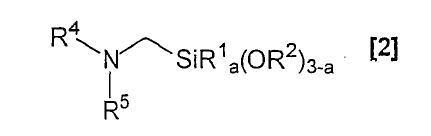 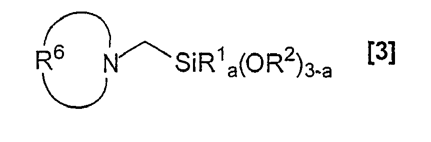 wobei
- **R⁴**: einen gegebenenfalls substituierten Alkyl-, Aryl- oder Arylalkylrest, der über mindestens eine Carboxyl-, Carbonylgruppe oder eine gegenüber Isocyanaten reaktive OH-SH- oder NHR⁷-Gruppe verfügt, wobei die Alkylkette gegebenenfalls durch Sauerstoff, Carbonylgruppen, Schwefel oder NR⁷-Gruppen unterbrochen sein kann,
- **R⁵**: einen gegebenenfalls substituierten Alkyl-, Aryl- oder Arylalkylrest, wobei die Alkylkette gegebenenfalls durch Sauerstoff, Carbonylgruppen, Schwefel oder NR⁷-Gruppen unterbrochen sein kann, oder einen Rest R⁴,
- **R⁶**: einen difunktionellen, gegebenenfalls substituierten Alkyl-oder Arylalkyrest, der entweder in der Alkylkette über Carbonylgruppe oder eine gegenüber Isocyanaten reaktive NH-Funktion oder eine NR⁴-Funktion verfügt oder durch mindestens eine gegenüber Isocyanaten reaktive OH-, SH-oder NHR⁷-Gruppe substituiert ist, wobei die Alkylkette gegebenenfalls durch Sauerstoff, Schwefel, NR⁷-Gruppen oder Carbonylgruppen unterbrochen sein kann,
- **R⁷**: Wasserstoff oder einen gegebenenfalls substituierten Alkyl-, Aryl- oder Arylalkylrest darstellt und
**R¹, R²** und **a** die bei der allgemeinen Formel [1] angegebenen Bedeutungen aufweisen.

Als Reste **R⁴** werden Alkylreste mit 2-10 Kohlenstoffatomen bevorzugt, die über eine OH-Funktion oder Monoalkylaminogruppe verfügen, wobei Monoalkylaminogruppen besonders bevorzugt werden. Als Reste **R⁵** werden Alkylgruppen mit 1-6 Kohlenstoffatomen bevorzugt. Als Reste **R⁶** werden difunktionelle Alkylreste mit 2-10 Kohlenstoffatomen bevorzugt, die in der Alkylkette über eine NH-Funktion verfügen.

In einer besonders bevorzugten Ausführungsform der Erfindung werden als Silan (A1) mindestens eine Verbindungen der allgemeinen Formel [4] eingesetzt, 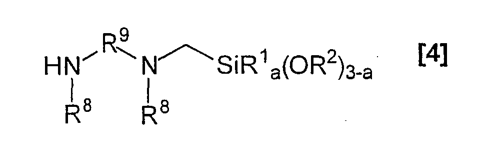 wobei
- **R⁸**: Alkylrest mit 1-4 Kohlenstoffatomen, bevorzugt Methyl oder Ethyl, und
- **R⁹**: einen difunktionellen Alkylrest mit 2-10, bevorzugt 2-6 Kohlenstoffatomen bedeuten und
**R¹, R²** und **a** die bei der allgemeinen Formel [1] angegebenen Bedeutungen aufweisen.

In einer weiteren besonders bevorzugten Ausführungsform der Erfindung wird als Silan (A1) mindestens eine Verbindung der allgemeinen Formel [5] oder [6] eingesetzt, 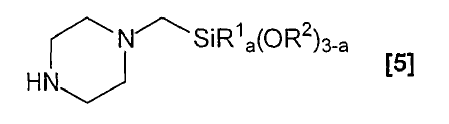 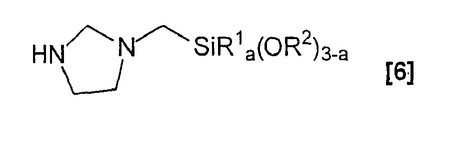 wobei **R¹**, **R²** und **a** die bei der allgemeinen Formel [1] angegebenen Bedeutungen aufweisen.

Die Silane (A1) werden bevorzugt durch die Reaktion der entsprechenden α-Halogenmethylalkoxysilane, besonders bevorzugt der α-Chlormethylalkoxysilane, mit sekundären Aminen hergestellt. Dabei wird das Chloratom des α-Chlorsilans durch das jeweilige sekundäre Amin substituiert. Dies kann sowohl mit als auch ohne Katalysator erfolgen, bevorzugt wird die Reaktion aber ohne Katalysator durchgeführt. Die Reaktion kann sowohl in Substanz als auch in einem Lösungsmittel durchgeführt werden. Das Amin kann dabei gleichzeitig als Säurefänger für den bei der nucleophilen Substitution freigesetzten Halogenwasserstoff dienen. Hier kann jedoch auch ein anderer Säurefänger zugesetzt werden. Bei einer bevorzugen Variante der Silanherstellung wird das Silan im Überschuß eingesetzt.

Die bevorzugt eingesetzten Silane entsprechend der Formel [4] können dabei in einem besonders vorteilhaften Verfahren hergestellt werden, indem ein Diamin der allgemeinen Formel [7], 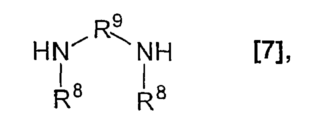 wobei **R⁸** und **R⁹** die bei der allgemeinen Formel [4] angegebenen Bedeutungen aufweisen, mit dem entsprechenden α-Halogenmethylsilan umgesetzt werden.

Zur Herstellung der besonders bevorzugten Silane der allgemeinen Formeln [5] oder [6] kann bei einer entsprechenden Reaktion von Piperazin bzw. von Tetrahydroimidazol ausgegangen werden.

Die erfindungsgemäßen Prepolymeren (A) werden bevorzugt hergestellt, indem ein oder mehrere Silane der allgemeinen Formeln [1] bis [6]
a) mit einem isocyanatterminierten Prepolymer (A2) umgesetzt werden, oder
b) mit einem NCO-Gruppen enthaltenden Precursor des Prepolymers (A) zu einem Silylgruppen enthaltendem Precursor umgesetzt werden, der dann in weiteren Reaktionsschritten zu dem fertigen Prepolymer (A) umgesetzt wird.

Bevorzugt werden dabei die Mengenverhältnisse der einzelnen Komponenten so gewählt, daß sämtliche in der Reaktionsmischung vorhandene Isocyanatgruppen abreagieren. Die resultierenden Prepolymere (A) sind somit bevorzugt isocyanatfrei.

Bei der Umsetzung der Silane (A1) zu silanterminierten Prepolymeren (A) werden diese bevorzugt mit isocyanatterminierten Prepolymeren (A2) umgesetzt. Letztere sind beispielsweise durch eine Reaktion eines oder mehrerer Polyole (A21) mit einem Überschuß an Di- oder Polyisocyanaten (A22) zugänglich.

Selbstverständlich kann die Reihenfolge der Reaktionsschritte dabei auch umgekehrt werden, d.h. die Silane (A1) werden in einem ersten Reaktionsschritt mit einem Überschuß eines oder mehrerer Di- oder Polyisocyanate (A22) umgesetzt und erst im zweiten Reaktionsschritt wird die Polyolkomponente (A21) zugegeben.

Als Polyole (A21) für die Herstellung der Prepolymere (A) können prinzipiell sämtliche Polyole mit einem mittleren Molekulargewicht Mn von 1000 bis 25000 eingesetzt werden. Dabei kann es sich beispielsweise um hydroxylfunktionelle Polyether, Polyester, Polyacrylate und -methacrylate, Polycarbonate, Polystyrole, Polysiloxane, Polyamide, Polyvinylester, Polyvinylhydroxide oder Polyolefine wie z.B. Polyethylen, Polybutadien, Ethylen-Olefincopolymere oder Styrol-Butadiencopolymere handeln.

Bevorzugt werden Polyole (A21) mit einem Molekulargewicht Mn von 2000 bis 25000, besonders bevorzugt von 4000 bis 20000 eingesetzt. Besonders geeignete Polyole (A21). sind aromatische und/oder aliphatische Polyesterpolyole und Polyetherpolyole, wie sie in der Literatur vielfach beschrieben sind. Die als Polyole (A21) eingesetzten Polyether und/oder Polyester können dabei sowohl linear als auch verzweigt sein, wobei jedoch unverzweigte, lineare Polyole bevorzugt werden. Zudem können Polyole (A21) auch Substituenten wie z.B. Halogenatome besitzen. Als Polyole (A21) werden insbesondere Polypropylenglycole mit Massen Mn von 4000 bis 20000 bevorzugt, da diese auch bei hohen Kettenlängen vergleichsweise niedrige Viskositäten aufweisen.

Ebenso können als Polyole (A21) auch hydroxyalkyl- oder aminoalkylterminierte Polysiloxane der allgemeinen Formel [8]

Z-R¹¹-[Si(R¹⁰)₂-O-]ₙ-Si(R¹⁰)₂-R¹¹-Z [8]

eingesetzt werden, in der
- **R¹⁰**: einen Kohlenwasserstoffrest mit 1 bis 12 Kohlenstoffatomen, bevorzugt Methylreste,
- **R¹¹**: eine verzweigte oder unverzweigte Kohlenwasserstoffkette mit 1-12 Kohlenstoffatomen, bevorzugt -CH₂- oder n-Propyl,
- **n**: eine Zahl von 1 bis 3000, bevorzugt eine Zahl von 10 bis 1000,
- **Z**: eine OH-, NHR⁷-, NR⁴R⁵- oder NR⁶-Gruppe und
**R⁴, R⁵, R⁶** und **R⁷** die bei den allgemeinen Formeln [2] und [3] angegebenen Bedeutungen aufweist.

Selbstverständlich ist auch der Einsatz beliebiger Mischungen der verschiedenen Polyoltypen möglich.

In einer bevorzugten Ausführung der Erfindung sind in der Polyolkomponente (A21) auch niedermolekulare Diole, wie z.B. Glycol, die verschiedenen Regioisomere des Propandiols, Butandiols, Pentandiols oder Hexandiols in der Polyolkomponente (A21) enthalten. Der Einsatz dieser niedermolekularen Diole führt dabei zu einer Steigerung der Urethangruppendichte im Prepolymer (A) und somit zu einer Verbesserung von mechanischen Eigenschaften der aus diesen Prepolymeren herstellbaren ausgehärteten Massen.

In einer weiteren besonders bevorzugten Ausführungsform der Erfindung sind in der Polyolkomponente (A21) auch noch niedermolekulare Aminoalkohole, wie beispielsweise 2-*N-*Methylaminoethanol enthalten. Auch niedermolekulare Diaminoverbindungen können in der Polyolkomponente enthalten sein.

Die niedermolekularen Diole, Diaminoverbindungen oder Aminoalkohole können einzeln oder auch als Mischungen eingesetzt werden. Sie können dabei als Mischungen mit den übrigen Komponenten (A21) eingesetzt und mit den Di- oder Polyisocyanaten (A22) umgesetzt werden. Auch kann ihre Umsetzung mit den Di- oder Polyisocyanaten (A22) vor oder nach der Umsetzung der übrigen Polyolkomponenten (A21) erfolgen.

In einer besonderen Variante der Herstellung der Prepolymere (A) können zunächst auch aus den übrigen Polyolen (A21), den Di- oder Polyisocyanaten (A22) und den Aminosilanen (A1) eine - meist deutlich niederviskosere - Vorstufe der Prepolymere (A) hergestellt werden, die noch über freie NCO-Funktionen verfügt. Aus dieser werden dann im letzten Reaktionsschritt durch Zugabe der niedermolekularen Diole, Diaminoverbindungen oder Aminoalkohole die fertigen Prepolymer (A) hergestellt.

Als Di- oder Polyisocyanate (A22) für die Herstellung der Prepolymere (A) können prinzipiell sämtliche gebräuchliche Isocyanate eingesetzt werden, wie sie in der Literatur vielfach beschrieben sind. Gängige Diisocyanate (A22) sind beispielsweise Diisocyanatodiphenylmethan (MDI), sowohl in Form von rohem oder technischem MDI als auch in Form reiner 4,4'-bzw. 2,4'-Isomeren oder deren Mischungen, Tolylendiisocyanat (TDI) in Form seiner verschiedenen Regioisomere, Diisocyanatonaphthalin (NDI), Isophorondiisocyanat (IPDI), perhydriertes MDI (H-MDI) oder auch von Hexamethylendiisocyanat (HDI). Beispiele für Polyisocyanate (A22) sind polymeres MDI (P-MDI), Triphenylmethantriisocanat oder Isocyanurat- oder Biuret-triisocyanate. Sämtliche Di- und/oder Polyisocyanate (A22) können einzeln oder auch in Mischungen eingesetzt werden. Bevorzugt werden jedoch ausschließlich Diisocyanate eingesetzt. Falls die UV-Stabilität der Prepolymere (A) oder der aus diesen Prepolymeren hergestellten ausgehärteten Materialien auf Grund der jeweiligen Anwendung von Bedeutung ist, werden bevorzugt aliphatische Isocyanate als Komponente (A22) verwendet.

Die Herstellung der Prepolymere (A) kann als Eintopfreaktion durch ein einfaches Zusammengeben der beschriebenen Komponenten erfolgen, wobei gegebenenfalls noch ein Katalysator zugegeben und/oder bei erhöhter Temperatur gearbeitet werden kann. Ob der relativ hohen Exothermie dieser Reaktionen kann es dabei vorteilhaft sein, die einzelnen Komponenten sukzessive zuzugeben, um die freiwerdende Wärmemenge besser kontrollieren zu können. Eine gesonderte Reinigung oder sonstige Aufarbeitung des Prepolymers (A) ist in der Regel nicht erforderlich.

Die Konzentrationen aller an sämtlichen Reaktionsschritten beteiligten Isocyanatgruppen und aller isocyanatreaktiven Gruppen sowie die Reaktionsbedingungen sind dabei bevorzugt so gewählt, daß im Laufe der Prepolymersynthese sämtliche Isocyanatgruppen abreagieren. Das fertige Prepolymer (A) ist somit bevorzugt isocyanatfrei. In einer bevorzugten Ausführungsform der Erfindung sind die Konzentrationsverhältnisse sowie die Reaktionsbedingungen so gewählt, daß nahezu sämtliche Kettenenden (> 80% der Kettenenden, besonders bevorzugt > 90% der Kettenenden) der Prepolymere (A) mit den Alkoxysilylgruppen der allgemeinen Formeln [1] bis [6] terminiert sind.

In einer bevorzugten Ausführungsform der Erfindung werden NCO-terminierte Prepolymere (A2) mit einem Überschuß der Silane (A1) umgesetzt. Der Überschuß beträgt bevorzugt 10-400%, besonders bevorzugt 20-100%. Das überschüssige Silan (A1) kann dem Prepolymer zu jedem beliebigen Zeitpunkt zugesetzt werden, bevorzugt wird der Silanüberschuß jedoch bereits während der Synthese der Prepolymere (A) zugegeben.

Die bei der Herstellung der Prepolymere (A) auftretenden Reaktionen zwischen Isocyanatgruppen und isocyanatreaktiven Gruppen können gegebenenfalls durch einen Katalysator beschleunigt werden. Bevorzugt werden dabei dieselben Katalysatoren eingesetzt, die unten auch als Härtungskatalysatoren (C) aufgeführt sind. Gegebenenfalls ist es sogar möglich, daß die Herstellung der Prepolymere (A) durch dieselben Katalysatoren katalysiert wird, die später bei der Aushärtung der fertigen Prepolymerabmischungen auch als Härtungskatalysator (C) dienen. Dies hat den Vorteil, daß der Härtungskatalysator (C) bereits in dem Prepolymer (A) enthalten ist und bei der Compoundierung einer fertigen Prepolymerabmischung (M) nicht mehr gesondert zugegeben werden muß. Selbstverständlich können dabei anstelle eines Katalysators auch Kombinationen mehrerer Katalysatoren eingesetzt werden.

Der Einsatz der erfindungsgemäßen Prepolymeren (A) hat zudem den besonderen Vorteil, daß sich so auch Prepolymere (A) herstellen lassen, welche ausschließlich Ethoxysilylgruppen enthalten, d.h. Silylgruppen der allgemeinen Formeln [1] bis [6], in der R² einen Ethylrest bedeutet. Die aus diesen Prepolymeren herstellbaren Massen (M) sind gegenüber Feuchtigkeit so reaktiv, daß sie auch ohne Zinnkatalysatoren mit hinreichend hoher Geschwindigkeit aushärten, obgleich Ethoxysilylgruppen generell weniger reaktiv sind als die entsprechenden Methoxysilylgruppen. So sind auch mit ethoxysilanterminierten Polymeren (A) zinnfreie Systeme möglich. Derartige Polymerabmischungen (M), die ausschließlich ethoxysilanterminierte Polymere (A) enthalten, besitzen den Vorteil, daß sie beim Härten lediglich Ethanol als Spaltprodukt freisetzen. Sie stellen eine bevorzugte Ausführungsform dieser Erfindung dar.

Die Prepolymere (A) werden bevorzugt mit weiteren Komponenten zu Mischungen (M) compoundiert. Um bei Raumtemperatur eine schnelle Aushärtung dieser Massen (M) zu erreichen, kann gegebenenfalls ein Härtungskatalysator (C) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage. Des weiteren können auch Titanate, z.B. Titan(IV)isopropylat, Eisen(III)-Verbindungen, z.B. Eisen(III)-acetylacetonat, oder auch Amine, z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholin etc., eingesetzt werden. Auch organische oder anorganische Brönstedsäuren wie Essigsäure, Trifluoressigsäure oder Benzoylchlorid, Salzsäure, Phoshorsäure deren Mono-und/oder Diester, wie z.B. Butylphosphat, (Iso-) Propylphosphat, Dibutylphosphat etc., sind als Katalysatoren (C) geeignet. Daneben können hier aber auch zahlreiche weitere organische und anorganische Schwermetallverbindungen sowie organische und anorganische Lewissäuren oder -basen eingesetzt werden. Zudem kann die Vernetzungsgeschwindigkeit auch durch die Kombination verschiedener Katalysatoren bzw. von Katalysatoren mit verschiedenen Cokatalysatoren weiter gesteigert bzw. genau auf den jeweiligen Bedarf hin abgestimmt werden. Dabei werden Mischungen (M) bevorzugt, die ausschließlich schwermetallfreie Katalysatoren (C) enthalten.

Die Prepolymere (A) werden bevorzugt in Abmischungen (M) eingesetzt, die zudem noch niedermolekulare Alkoxysilane (D) enthalten. Diese Alkoxysilane (D) können dabei mehrere Funktionen übernehmen. So können sie beispielsweise als Wasserfänger dienen, d.h. sie sollen eventuell vorhandene Feuchtigkeitsspuren abfangen und so die Lagerstabilität der entsprechenden silanvernetzenden Massen (M) erhöhen. Selbstverständlich müssen diese zumindest eine vergleichbar hohe Reaktivität gegenüber Feuchtigkeitsspuren besitzen wie das Prepolymer (A). Geeignet als Wasserfänger sind daher vor allen hochreaktive Alkoxysilane (D) der allgemeinen Formeln [1] - [6] sowie der allgemeinen Formel [9] 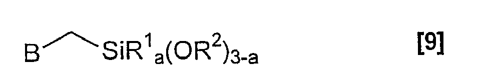 wobei
- **B**: eine OH-, OR⁷-, SH-, SR⁷-, NH₂-, NHR⁷-, N(R⁷)₂-Gruppe bedeutet und
**R¹ ,R², R⁷** und a die bei den allgemeinen Formeln [1] bis [3] angegebenen Bedeutungen aufweisen.

Ein besonders bevorzugter Wasserfänger ist dabei das Carbamatosilan, bei dem **B** eine R⁷O-CO-NH-Gruppe darstellt.

Des weiteren können die niedermolekularen Alkoxysilane (D) auch als Vernetzer und/oder Reaktivverdünner dienen. Zu diesem Zweck sind prinzipiell sämtliche Silane geeignet, die über reaktive Alkoxysilylgruppen verfügen, über die sie während der Aushärtung der Polymerabmischung (M) mit in das entstehende dreidimensionale Netzwerk eingebaut werden können. Die Alkoxysilane (D) können dabei zu einer Steigerung der Netzwerkdichte und damit zur Verbesserung der mechanischen Eigenschaften, z.B. der Reißfestigkeit, der ausgehärteten Masse (M) beitragen. Zudem können sie auch die Viskosität der entsprechenden Prepolymerabmischungen (M) senken. Als Alkoxysilane (D) eignen sich in dieser Funktion beispielsweise Alkoxymethyltrialkoxysilane und Alkoxymethyldialkoxyalkylsilane. Als Alkoxygruppen werden dabei Methoxy- und Ethoxygruppen bevorzugt. Zudem können auch die preisgünstigen Alkyltrimethoxysilane, wie Methyltrimethoxysilan sowie Vinyl- oder Phenyltrimethoxysilan, sowie deren Teilhydrolysate geeignet sein.

Auch können die niedermolekularen Alkoxysilane (D) als Haftvermittler dienen. Hier können vor allem Alkoxysilane eingesetzt werden, die über Aminofunktionen oder Epoxyfunktionen verfügen. Als Beispiele seien γ-Aminopropyltrialkoxysilane, γ-[N-Aminoethylamino]-propyltrialkoxysilane, γ-Glycidoxy-propyltrialkoxysilane sowie sämtliche Silane der allgemeinen Formel [8], bei denen B für eine stickstoffhaltige Gruppe steht, genannt.

Schließlich können die niedermolekularen Alkoxysilane (D) sogar als Härtungskatalysatoren oder -cokatalysatoren dienen. Zu diesem Zweck eignen sich vor allem sämtliche basischen Aminosilane, wie z.B. sämtliche Aminopropylsilane, N-Aminoethylaminopropylsilane sowie auch sämtliche Silane der allgemeinen Formel [8] soweit es sich bei **B** um eine stickstoffhaltige Gruppe handelt.

Die Alkoxysilane (D) können den Prepolymeren (A) zu jedem beliebigen Zeitpunkt zugegeben werden. Soweit sie über keine NCO-reaktiven Gruppen verfügen, können sie sogar bereits während der Synthese der Prepolymere (A) zugesetzt werden. Dabei können, bezogen auf 100 Gewichtsteile Prepolymer (A), bis zu 100 Gewichtsteile, vorzugsweise 1 bis 40 Gewichtsteile, eines niedermolekularen Alkoxysilanes (D) zugesetzt werden.

Des weiteren werden Abmischungen aus den alkoxysilantermierten Prepolymeren (A) üblicherweise Füllstoffe (E) zugegeben. Die Füllstoffe (E) führen dabei zu einer erheblichen Eigenschaftsverbesserung der resultierenden Abmischungen (M). Vor allem die Reißfestigkeit wie auch die Bruchdehnung können durch den Einsatz von geeigneten Füllstoffen erheblich gesteigert werden. Die Abmischungen (M) verfügen nach der Aushärtung vorzugsweise über eine Reißdehnung > 4 MPa, insbesondere > 5 MPa.

Als Füllstoffe (E) eignen sich dabei sämtliche Materialien, wie sie im Stand der Technik vielfach beschrieben sind. Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Calciumcarbonat, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mindestens 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Die Füllstoffe (E) werden bevorzugt in einer Konzentration von 0-90 Gew.-% bezogen auf die fertige Abmischung (M) eingesetzt, wobei Konzentrationen von 30-70 Gew.-% besonders bevorzugt sind. In einer bevorzugten Anwendung werden Füllstoffkombinationen (E) eingesetzt, die neben Calciumcarbonat noch pyrogene Kieselsäure und/oder Ruß enthalten.

Die Abmischungen (M) enthaltend die Prepolymere (A) können zudem auch noch geringe Mengen eines organischen Lösungsmittels (F) enthalten. Dieses Lösungsmittel dient dabei der Erniedrigung der Viskosität der unvernetzten Massen (M). Als Lösungsmittel (F) kommen prinzipiell sämtliche Lösungsmittel sowie Lösemittelmischungen in Betracht. Als Lösungsmittel (F) werden bevorzugt Verbindungen eingesetzt, die über ein Dipolmoment verfügen. Besonders bevorzugte Lösungsmittel verfügen über ein Heteroatom mit freien Elektronenpaaren, die Wasserstoffbrückenbindungen eingehen können. Bevorzugte Beispiele für solche Lösungsmittel sind Ether wie z.B. t-Butylmethylether, Ester, wie z.B. Ethylacetat oder Butylacetat sowie Alkohole, wie z.B. Methanol, Ethanol, n- und t-Butanol. Die Lösungsmittel (F) werden bevorzugt in einer Konzentrationen von 0-20 Vol.-% bezogen auf die fertige Prepolymermischung (M) incl. aller Füllstoffe (E) eingesetzt, wobei Lösungsmittelkonzentrationen von 0-5 Vol.-% besonders bevorzugt sind.

Die Polymerabmischungen (M) können als weitere Komponenten an sich bekannte Hilfsstoffe, wie von den Komponenten (D) abweichende Wasserfänger und/oder Reaktivverdünner sowie Haftvermittler, Weichmacher, Thixotropiermittel, Fungizide, Flammschutzmittel, Pigmente etc. enthalten. Auch Lichtschutzmittel, Antioxidantien, Radikalfänger sowie weitere Stabilisatoren können den Massen (M) zugesetzt werden. Zur Erzeugung der jeweils gewünschten Eigenschaftsprofile, sowohl der unvernetzten Polymerabmischungen (M) als auch der ausgehärteten Massen (M), sind derartige Zusätze bevorzugt.

Für die Polymerabmischungen (M) existieren zahlreiche verschiedene Anwendungen im Bereich der Kleb-, Dicht- und Fugendichtstoffe, Oberflächenbeschichtungen sowie auch bei der Herstellung von Formteilen.
Die Polymerabmischungen (M) können dabei sowohl in reiner Form als auch in Form von Lösungen oder Dispersionen zum Einsatz kommen.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1:

### Herstellung von N-[(Methyldiethoxysilyl)-methyl]-piperazin:

377 g (4,4 mol) Piperazin und 566 g Dioxan als Lösungsmittel werden in einem 2 Liter 4-Hals-Kolben vorgelegt und anschließend mit Stickstoff inertisiert. Man heizt auf eine Temperatur von 90 °C auf bis sich das Piperazin vollständig gelöst hat. Anschließend wird auf 80 °C abgekühlt. Bei dieser Temperatur tropft man 179,2 g (0,88 mol) Chlormethylmethyldiethoxysilan über 2 h zu und rührt für weitere 2 Stunden bei 80 °C. Nach einer Zugabe von ca. 1/3 der Silanmenge fällt vermehrt Piperazin-hydrochlorid als Salz aus, jedoch bleibt die Suspension bis zum Ende der Reaktion gut rührbar. Die Suspension wird über Nacht stehen lassen. Anschließend wird das ausgefallene Salz abfiltriert und das Lösungsmittel sowie Teile des überschüssigen Piperazins bei 60 - 70 °C destillativ entfernt. Der Rückstand wird auf 4 °C abgekühlt, wobei das in der Reaktionsmischung verbliebene Piperazin ausfällt. Dieses wird abfiltriert. Das Filtrat wird destillativ gereinigt (108 - 114 °C bei.8 mbar). Es wird eine Ausbeute von 123,4 g, d.h. ca. 60 % bezogen auf die eingesetzte Silanmenge, erreicht.

### Beispiel 2:

### Herstellung von N-[(Triethoxysilyl)-methyl]-piperazin:

430,7 g (5,0 mol) Piperazin und 646 g Dioxan als Lösungsmittel werden in einem 2 Liter 4-Hals-Kolben vorgelegt und anschließend mit Stickstoff inertisiert. Man heizt auf eine Temperatur von 90 °C auf bis sich das Piperazin vollständig gelöst hat. Anschließend wird auf 80 °C abgekühlt. Bei dieser Temperatur tropft man 212,8 g (1,0 mol) Chlormethyltriethoxysilan über 2 h zu und rührt für weitere 2 Stunden bei 80 °C. Nach einer Zugabe von ca. 1/3 der Silanmenge fällt vermehrt Piperazin-hydrochlorid als Salz aus, jedoch bleibt die Suspension bis zum Ende der Reaktion gut rührbar. Die Suspension wird über Nacht stehen lassen. Anschließend wird das ausgefallene Salz abfiltriert und das Lösungsmittel sowie Teile des überschüssigen Piperazins bei 60 - 70 °C destillativ entfernt. Der Rückstand wird auf 4 °C abgekühlt, wobei das in der Reaktionsmischung verbliebene Piperazin ausfällt. Dieses wird abfiltriert. Das Filtrat wird destillativ gereinigt (88 - 90 °C bei 0,4 mbar). Es wird eine Ausbeute von 162,7 g, d.h. ca. 62 % bezogen auf die eingesetzte Silanmenge, erreicht.

### Beispiel 3:

### Herstellung von Triethoxysilylmethylcarbaminsäuremethylester:

61,3 g (7,56 mol) extra fein gemahlenes Kaliumisocyanat werden in einem 1 Liter 4-Hals-Kolben eingewogen. Anschließend werden 404 g (0,51 1, 12,6 mol) Methanol, 184,0 g (0,196 1) Dimethylformamid sowie 125,5 g (0,59 mol) Chlormethyltriethoxysilan eingefüllt. Unter Rühren wird die Reaktionsmischung zum Sieden erhitzt und insgesamt 10 h unter Rückfluß gehalte, wobei die Siedetemperatur von 100 °C auf 128 °C ansteigt und dann stabil bleibt. Nach dem Abkühlen auf Raumtemperatur wird das gebildete Kaliumchlorid über eine Nutsche abgetrennt und der Filterkuchen mit 1,1 l Methanol gewaschen. Im Rotationsverdampfer werden die Lösungsmittel Methanol und Dimethylformamid entfernt. Die verbliebenen Mengen an Kaliumchlorid werden abgetrennt. Die Rohlösung wird destillativ gereinigt (84 - 89 °C bei 3 mbar). Insgesamt werden 73,6 g (53 % d. Th.) Produkt erhalten .

### Beispiel 4:

Bestimmung der Stabilität von α-Aminomethylsilanen in Gegenwart von Methanol.

Allgemeine Vorschrift: Das α-Aminosilan wird in Methanol-D4 gelöst (10 Gew.-%). Die resultierende Lösung wird wiederholt ¹H-NMR-spektroskopisch vermessen. Zur Bestimmung der Halbwertszeit (t_{1/2}) des α-Aminosilans werden die Integrale des Methylen-Spacers =N-CH₂-Si(O)R₃ im unzersetzten α-Aminosilan (δ ca. 2.2 ppm) sowie das Integral der als Zersetzungsprodukt (Spaltung der Si-C Bindung) erhaltenen Methylgruppe =NCH₂D (δ ca. 2.4 ppm) herangezogen.

### Beispiel 5:

### Herstellung eines silanterminierten Prepolymers (A):

In einem 250 ml Reaktionsgefäß mit Rühr-, Kühl und Heizmöglichkeiten werden 152 g (16 mmol) eines Polypropylenglykols mit einem mittleren Molekulargewicht von 9500 g/mol (Acclaim^{®} 12200 der Fa. Bayer) vorgelegt und 30 Minuten bei 80 °C im Vakuum entwässert. Anschließend werden bei dieser Temperatur unter Stickstoff 2,16 g (24 mmol) 1,4-Butandiol, 12,43 g (56 mmol) Isophorondiisocyanat und 80 mg Dibutylzinndilaurat (entspricht einem Zinngehalt von 100 ppm) zugegeben. Es wird für 60 Minuten bei 80 °C gerührt. Das erhaltene NCO-terminierte Polyurethanprepolymer wird danach auf 60 °C abgekühlt und mit 11,90 g (51,2 mmol) *N-*[(Methyldiethoxysily)methyl]-piperazin versetzt und für 60 min bei 80 °C gerührt. Zur Viskositäterniedrigung werden 9 g Ethanol (ca. 5 Gew.-% bezogen auf das fertige Prepolymer) zugegeben. Es resultiert eine Prepolymermischung, die sich mit einer Viskosität von ca. 200 Pas bei 20 °C problemlos gießen und weiterverarbeiten läßt. IR-spektroskopisch lassen sich keine Isocyanatgruppen mehr nachweisen.

### Beispiel 6:

### Herstellung eines silanterminierten Prepolymers (A):

In einem 250 ml Reaktionsgefäß mit Rühr-, Kühl und Heizmöglichkeiten werden 152 g (16 mmol) eines Polypropylenglykols mit einem mittleren Molekulargewicht von 9500 g/mol (Acclaim^{®} 12200 der Fa. Bayer) vorgelegt und 30 Minuten bei 80 °C im Vakuum entwässert. Anschließend werden bei dieser Temperatur unter Stickstoff 2,16 g (24 mmol) 1,4-Butandiol, 12,43 g (56 mmol) Isophorondiisocyanat und 80 mg Dibutylzinndilaurat (entspricht einem Zinngehalt von 100 ppm) zugegeben. Es wird für 60 Minuten bei 80 °C gerührt. Das erhaltene NCO-terminierte Polyurethanprepolymer wird danach auf 60 °C abgekühlt und mit 13,44 g (51,2 mmol) *N-*[(Triethoxysily)methyl]-piperazin versetzt und für 60 min bei 80 °C gerührt. Zur Viskositätserniedrigung werden 9 g Ethanol (ca. 5 Gew.-% bezogen auf das fertige Prepolymer) zugegeben. Es resultiert eine Prepolymermischung, die sich mit einer Viskosität von ca. 200 Pas bei 20 °C problemlos gießen und weiterverarbeiten läßt. IR-spektroskopisch lassen sich keine Isocyanatgruppen mehr nachweisen.

### Beispiel 7:

### Herstellung eines silanterminierten Prepolymers (A):

In einem 250 ml Reaktionsgefäß mit Rühr-, Kühl und Heizmöglichkeiten werden 152 g (16 mmol) eines Polypropylenglykols mit einem mittleren Molekulargewicht von 9500 g/mol (Acclaim^{®} 12200 der Fa. Bayer) vorgelegt und 30 Minuten bei 80 °C im Vakuum entwässert. Anschließend werden bei dieser Temperatur unter Stickstoff 2,16 g (24 mmol) 1,4-Butandiol, 12,43 g (56 mmol) Isophorondiisocyanat und 80 mg Dibutylzinndilaurat (entspricht einem Zinngehalt von 100 ppm) zugegeben. Es wird für 60 Minuten bei 80 °C gerührt. Das erhaltene NCO-terminierte Polyurethanprepolymer wird danach auf 60 °C abgekühlt und mit 9,24 g (35,2 mmol) *N-*[(Triethoxysily)methyl]-piperazin versetzt und für 60 min bei 80 °C gerührt. Zur Viskositätserniedrigung werden 9 g Ethanol (ca. 5 Gew.-% bezogen auf das fertige Prepolymer) zugegeben. Es resultiert eine Prepolymermischung, die sich mit einer Viskosität von ca. 380 Pas bei 20 °C nur bei höheren Temperatur gut gießen und weiterverarbeiten läßt. (Hier besteht jedoch die Möglichkeit, die in der fertigen Abmischung (M) vorhandenen zusätzlichen Alkoxysilane (D) dem Prepolymer bereits während dessen Herstellung zuzusetzen und dessen Viskosität auf diesem Wege zu erniedrigen.) IR-spektroskopisch lassen sich keine Isocyanatgruppen mehr nachweisen.

### Beispiel 8:

### Herstellung eines silanterminierten Prepolymers (A):

In einem 250 ml Reaktionsgefäß mit Rühr-, Kühl und Heizmöglichkeiten werden 160 g (20 mmol) eines Polypropylenglykols mit einem mittleren Molekulargewicht von 8000 g/mol (Acclaim^{®} 8200 der Fa. Bayer) vorgelegt und 30 Minuten bei 80 °C im Vakuum entwässert. Anschließend werden bei dieser Temperatur unter Stickstoff 2,70 g (30 mmol) 1,4-Butandiol, 15,54 g (70 mmol) Isophorondiisocyanat und 85 mg Dibutylzinndilaurat (entspricht einem Zinngehalt von 100 ppm) zugegeben. Es wird für 60 Minuten bei 80 °C gerührt. Das erhaltene NCO-terminierte Polyurethanprepolymer wird danach auf 60 °C abgekühlt und mit 14,87 g (64 mmol) *N-*[(Methyldiethoxysily)methyl]-piperazin versetzt und für 60 min bei 80 °C gerührt. Zur Viskositätserniedrigung werden 9,8 g Ethylacetat (ca. 5 Gew.-% bezogen auf das fertige Prepolymer) zugegeben. Es resultiert eine Prepolymermischung, die sich mit einer Viskosität von 120 Pas bei 20 °C problemlos gießen und weiterverarbeiten läßt. IR-spektroskopisch lassen sich keine Isocyanatgruppen mehr nachweisen.

### Beispiel 9:

### Herstellung eines silanterminierten Prepolymers (A):

In einem 250 ml Reaktionsgefäß mit Rühr-, Kühl und Heizmöglichkeiten werden 160 g (20 mmol) eines Polypropylenglykols mit einem mittleren Molekulargewicht von 8000 g/mol (Acclaim^{®} 8200 der Bayer AG) vorgelegt und 30 Minuten bei 80°C im Vakuum entwässert. Anschließend werden bei dieser Temperatur unter Stickstoff 3,00 g (40 mmol) 2-(Methylamino)-ethanol, 17,76 g (80 mmol) Isophorondiisocyanat und 85 mg Dibutylzinndilaurat (entspricht einem Zinngehalt von 100ppm) zugegeben. Es wird für 60 Minuten bei 80 °C gerührt. Das erhaltene NCO-terminierte Polyurethanprepolymer wird danach auf 60 °C abgekühlt und mit 14,87 g (64 mmol) *N-*[(Methyldiethoxysily)methyl]-piperazin versetzt und für 60 min bei 80 °C gerührt. In dem resultierenden Prepolymer lassen sich IR-spektroskopisch keine Isocyanatbanden mehr nachweisen. Es läßt sich auch ohne Lösungsmittelzusatz mit einer Viskosität von 140 Pas problemlos gießen und weiterverarbeiten. Nach der Zugabe von 5,9 g Ethanol (ca. 3 Gew.-% bezogen auf das fertige Prepolymer) beträgt die Viskosität noch ca. 50 Pas.

### Vergleichsbeispiel 1:

### Herstellung eines nicht erfindungsgemäßen silanterminierten Prepolymers:

Dieses Vergleichsbeispiel ist direkt vergleichbar mit Beispiel 5. Jedoch wird hier als Silankomponente anstelle des *N-*[(Methyldiethoxysily)methyl]-piperazins eine äquimolare Menge *N*-Cyclohexylaminomethyldimethoxymethylsilan eingesetzt. Alle weiteren Komponenten bleiben gegenüber Beispiel 5 unverändert.

In einem 250 ml Reaktionsgefäß mit Rühr-, Kühl und Heizmöglichkeiten werden 152 g (16 mmol) eines Polypropylenglykols mit einem mittleren Molekulargewicht von 9500 g/mol (Acclaim 12200 der Fa. Bayer) vorgelegt und 30 Minuten bei 80 °C im Vakuum entwässert. Anschließend wird die Heizung entfernt und unter Stickstoff 2,16 g (24 mmol) 1,4-Butandiol, 12,43 g (56 mmol) Isophorondiisocyanat und 80 mg Dibutylzinndilaurat (entspricht einem Zinngehalt von 100ppm) zugegeben. Es wird für 60 Minuten bei 80 °C gerührt. Das erhaltene NCO-terminierte Polyurethanprepolymer wird danach auf 75 °C abgekühlt und mit 12,77 g (51,2 mmol) *N-*Cyclohexylaminomethyldiethoxymethylsilan versetzt und 60 min bei 80 °C gerührt. Zur Viskositätserniedrigung werden 9 g Ethanol (ca. 5 Gew.-% bezogen auf das fertige Prepolymer) zugegeben. Es resultiert eine Prepolymermischung, die sich mit einer Viskosität von ca. 100 Pas bei 20 °C problemlos gießen und weiterverarbeiten läßt. IR-spektroskopisch lassen sich keine Isocyanatgruppen mehr nachweisen.

### Beispiel 10: Herstellung von feuchtigkeitshärtenden Abmischungen (M) enthaltend Prepolymere (A):

Allgemeine Vorschrift (Die konkreten Mengenangaben für die einzelnen Komponenten können der Tabelle 1 entnommen werden. Sind einzelne Komponenten dabei nicht vorhanden, wird auf die jeweiligen Einarbeitungsschritte verzichtet) :
Zu dem in Tabelle 1 angegebenen Prepolymer wird Carbamatomethyltrimethoxysilan (Silan 1) zugegeben und 15 Sekunden lang bei 27000 rpm in einem Speedmixer (DAC 150 FV der Firma Hausschild) gemischt. Dann werden Kreide (BLR 3 der Firma Omya), feinteilige Kieselsäure WACKER HDK^{®} V 15 (Wacker Chemie GmbH, Germany) und 2 mal 20 Sekunden bei einer Umdrehung von 30000 rpm gemischt. Schließlich wird Aminopropyltrimethoxysilan (Silan 2) hinzugegeben und ebenfalls 20 Sekunden bei einer Umdrehung von 30000 rpm gemischt.

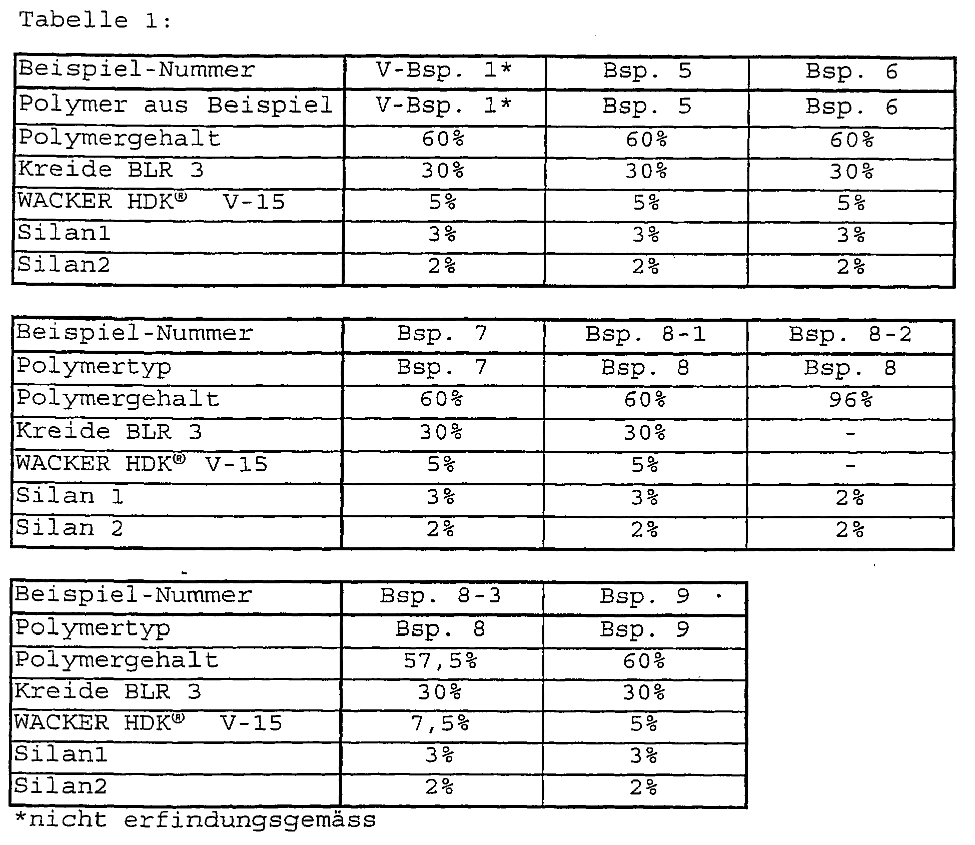

### Beispiel 11:

### Eigenschaften der ausgehärteten Abmischungen (M) enthaltend Prepolymere (A)

Die fertige Prepolymerabmischung wird mit Hilfe eines Rakels in eine 2 mm hohe Teflon^{®}-Form verstrichen, wobei die Durchhärtegeschwindikeit ca. 2 mm am Tag beträgt. Nach zweiwöchiger Lagerung werden S1-Prüfkörper ausgestanzt, deren Zugeigenschaften nach EN ISO 527-2 an der Z010 der Firma Zwick vermessen werden. Die dabei bestimmten Eigenschaften der jeweiligen Prepolymerabmischungen sind in Tabelle 2 aufgelistet. Dabei ist das nicht erfindungsgemäße Vergleichsbeispiel 1 (V-Bsp. 1) direkt mit dem erfindungsgemäßen Beispiel 5 (Bsp. 5) vergleichbar.

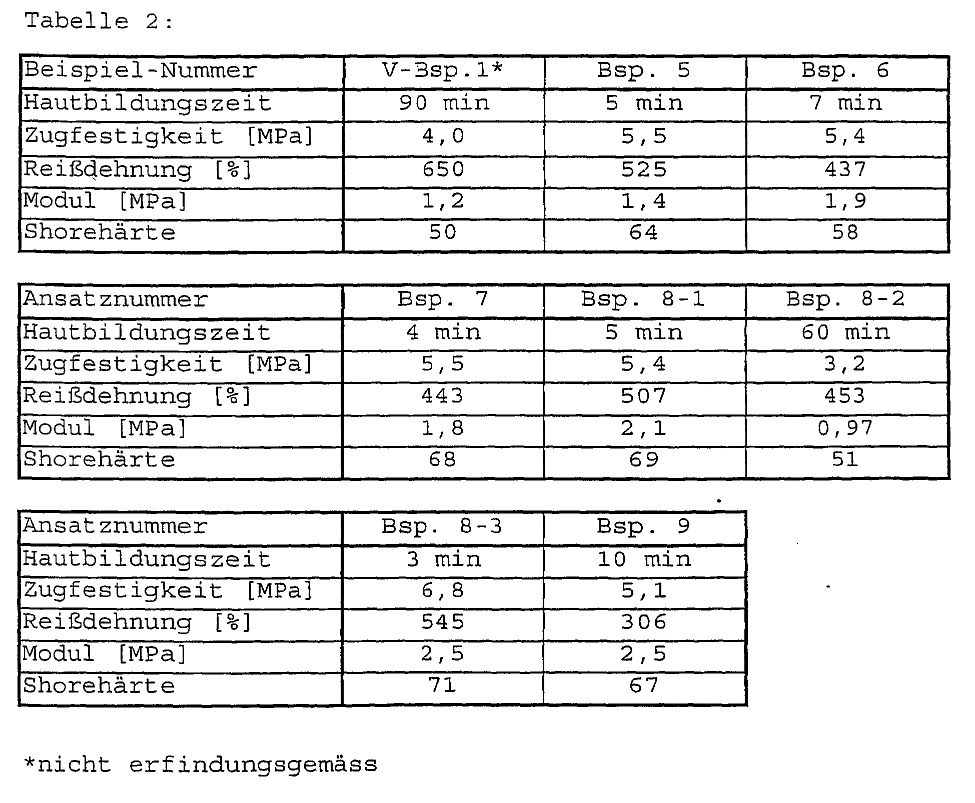

## Patentansprüche

1. Alkoxysilanfunktionelle Prepolymere (A) erhältlich durch Einsatz eines aminomethylfunktionellen Alkoxysilans (A1), das über mindestens ein Strukturelement der allgemeinen 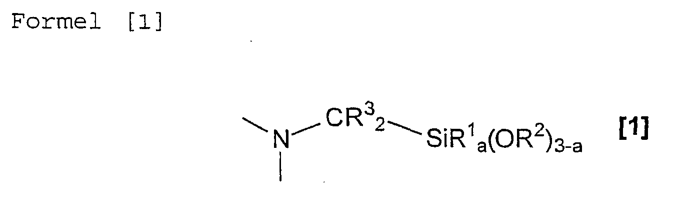 verfügt,
in der
**R¹** einen gegebenenfalls substituierten Kohlenwasserstoffrest oder eine =N-CR³₂-Gruppe,
**R²** einen Alkylrest mit 1-6 Kohlenstoffatomen oder einen ω-Oxaalkyl-alkylrest mit insgesamt 2-10 Kohlenstoffatomen,
**R³** Wasserstoff oder einen gegebenenfalls substituierten Kohlenwasserstoffrest darstellt, und
**a** die Werte 0, 1 oder 2 annehmen kann,
wobei es sich bei dem Stickstoffatom in der allgemeinen Formel [1] um ein tertiäres Stickstoffatom handelt und das Alkoxysilan (A1) über mindestens eine weitere gegenüber Isocyanaten reaktive Funktion (F) verfügt.

2. Alkoxysilanfunktionelle Prepolymere (A) nach Anspruch 1, bei denen die Reste **R¹** 1 bis 12 C-Atome aufweisen.

3. Alkoxysilanfunktionelle Prepolymere (A) nach Anspruch 1 und 2, bei denen die Reste **R²** Methyl- oder Ethylgruppen sind.

4. Alkoxysilanfunktionelle Prepolymere (A) nach Anspruch 1 bis 3, bei denen die Funktion (F) ausgewählt wird aus der NH-, OH- oder SH-Funktion.

5. Alkoxysilanfunktionelle Prepolymere (A) nach Anspruch 1 bis 4, bei denen die Alkoxysilane (A1) der allgemeinen Formel [2] oder [3] 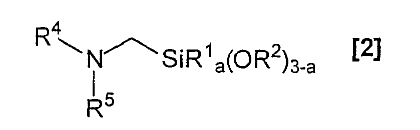 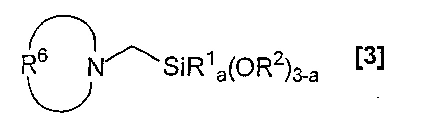 entsprechen, wobei
**R⁴** einen gegebenenfalls substituierten Alkyl-, Aryl- oder Arylalkylrest, der über mindestens eine Carboxyl-, Carbonylgruppe oder eine gegenüber Isocyanaten reaktive OH-SH- oder NHR⁷-Gruppe verfügt, wobei die Alkylkette gegebenenfalls durch Sauerstoff, Carbonylgruppen, Schwefel oder NR⁷-Gruppen unterbrochen sein kann,
**R⁵** einen gegebenenfalls substituierten Alkyl-, Aryl- oder Arylalkylrest, wobei die Alkylkette gegebenenfalls durch Sauerstoff, Carbonylgruppen, Schwefel oder NR⁷-Gruppen unterbrochen sein kann, oder einen Rest R⁴,
**R⁶** einen difunktionellen, gegebenenfalls substituierten Alkyl-oder Arylalkyrest, der entweder in der Alkylkette über Carbonylgruppe oder eine gegenüber Isocyanaten reaktive NH-Funktion oder eine NR⁴-Funktion verfügt oder durch mindestens eine gegenüber Isocyanaten reaktive OH-, SH-oder NHR⁷-Gruppe substituiert ist, wobei die Alkylkette gegebenenfalls durch Sauerstoff, Schwefel, NR⁷-Gruppen oder Carbonylgruppen unterbrochen sein kann,
**R⁷** Wasserstoff oder einen gegebenenfalls substituierten Alkyl-, Aryl- oder Arylalkylrest darstellt, und
**R¹, R²** und **a** die bei der allgemeinen Formel [1] gemäß Anspruch 1 angegebenen Bedeutungen aufweisen.

6. Alkoxysilanfunktionelle Prepolymere (A) nach Anspruch 1 bis 5, bei denen die Alkoxysilane (A1) der allgemeinen Formel [4] 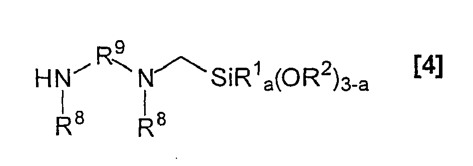 entsprechen, wobei
**R⁸** Alkylrest mit 1-4 Kohlenstoffatomen, und
**R⁹** einen difunktionellen Alkylrest mit 2-10 Kohlenstoffatomen bedeuten, und
**R¹, R²** und **a** die bei der allgemeinen Formel [1] gemäß Anspruch 1 angegebenen Bedeutungen aufweisen

7. Alkoxysilanfunktionelle Prepolymere (A) nach Anspruch 1 bis 4, bei denen die Alkoxysilane (A1) der allgemeinen Formel [5] oder [6] 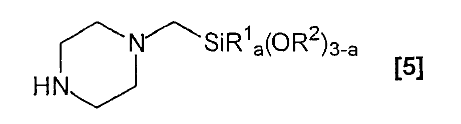 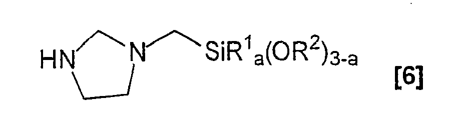 entsprechen, wobei
**R¹, R²** und **a** die bei der allgemeinen Formel [1] gemäß Anspruch 1 angegebenen Bedeutungen aufweisen.

8. Verfahren zur Herstellung der alkoxysilanfunktionellen Prepolymere (A) nach Anspruch 1 bis 7, bei dem ein oder mehrere Silane der allgemeinen Formeln [1] bis [6] gemäß der Ansprüche 1 und 5 bis 7
a) mit einem isocyanatterminierten Prepolymer (A2) umgesetzt werden, oder
b) mit einem NCO-Gruppen enthaltenden Precursor des Prepolymers (A) zu einem Silylgruppen enthaltendem Precursor umgesetzt werden, der dann in weiteren Reaktionsschritten zu dem fertigen Prepolymer (A) umgesetzt wird.

9. Verfahren nach Anspruch 8, bei dem die Mengenverhältnisse der einzelnen Komponenten so gewählt werden, daß sämtliche in der Reaktionsmischung vorhandene Isocyanatgruppen abreagieren.

10. Mischungen (M), enthaltend die Prepolymere (A) gemäß Anspruch 1 bis 7 und weitere Komponenten.

## Claims

1. Alkoxysilane-functional prepolymers (A) obtainable by using an aminomethyl-functional alkoxysilane (A1) which possesses at least one structural element of the general formula [1] 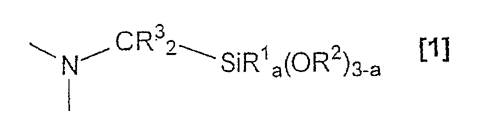 in which
**R¹** is an optionally substituted hydrocarbon radical or a =N-CR³₂ group,
**R²** is an alkyl radical having 1-6 carbon atoms or an ω-oxaalkyl-alkyl radical having in total 2-10 carbon atoms,
**R³** is hydrogen or an optionally substituted hydrocarbon radical, and
**a** may adopt the values 0, 1 or 2,
the nitrogen atom in the general formula [1] being a tertiary nitrogen atom and the alkoxysilane (A1) possessing at least one further isocyanate-reactive function (F).

2. Alkoxysilane-functional prepolymers (A) according to claim 1, in which the radicals **R¹** have 1 to 12 C atoms.

3. Alkoxysilane-functional prepolymers (A) according to claim 1 and 2, in which the radicals **R²** are methyl or ethyl groups.

4. Alkoxysilane-functional prepolymers (A) according to claim 1 to 3, in which the function (F) is selected from the NH, OH or SH function.

5. Alkoxysilane-functional prepolymers (A) according to claim 1 to 4, in which the alkoxysilanes (A1) are of the general formula [2] or [3] 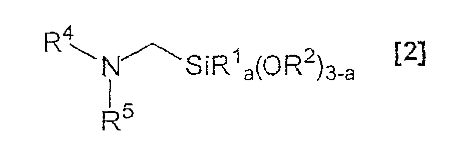 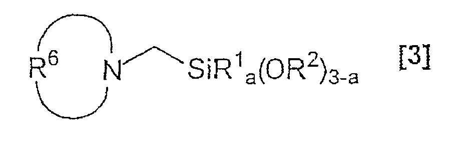 where
**R⁴** is an optionally substituted alkyl, aryl or arylalkyl radical which possesses at least one carboxyl or carbonyl group or an isocyanate-reactive OH, SH or NHR⁷ group, it being possible for the alkyl chain to be interrupted optionally by oxygen, carbonyl groups, sulfur or NR⁷ groups,
**R⁵** is an optionally substituted alkyl, aryl or arylalkyl radical, it being possible for the alkyl chain to be interrupted optionally by oxygen, carbonyl groups, sulfur or NR⁷ groups, or is a radical R⁴,
**R⁶** is a difunctional, optionally substituted alkyl or arylalkyl radical which either in the alkyl chain possesses carbonyl group or an isocyanate-reactive NH function or an NR⁴ function, or is substituted by at least one isocyanate-reactive OH, SH or NHR⁷ group, it being possible for the alkyl chain to be interrupted optionally by oxygen, sulfur, NR⁷ groups or carbonyl groups,
**R⁷** is hydrogen or an optionally substituted alkyl, aryl or arylalkyl radical, and
**R¹, R²,** and **a** are as defined for the general formula [1] in accordance with claim 1.

6. Alkoxysilane-functional prepolymers (A) according to claim 1 to 5, in which the alkoxysilanes (A1) are of the general formula [4] 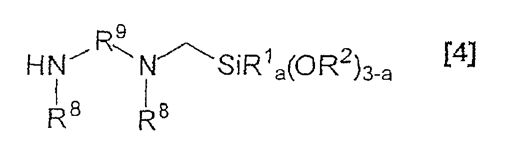 where
**R⁸** is alkyl radical having 1-4 carbon atoms, and
**R⁹** is a difunctional alkyl radical having 2-10 carbon atoms, and
**R¹, R²** and **a** are as defined for the general formula [1] in accordance with claim 1.

7. Alkoxysilane-functional prepolymers (A) according to claim 1 to 4, in which the alkoxysilanes (A1) are of the general formula [5] or [6] 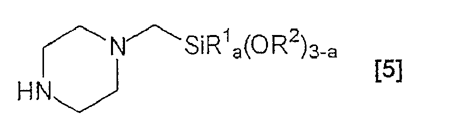 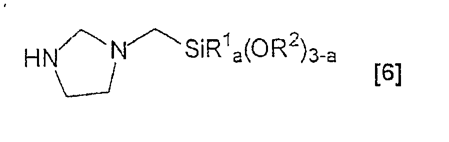 where
**R¹, R²** and **a** are as defined for the general formula [1] in accordance with claim 1.

8. Process for preparing the alkoxysilane-functional prepolymers (A) according to claim 1 to 7, in which one or more silanes of the general formulae [1] to [6] in accordance with claims 1 and 5 to 7
a) are reacted with an isocyanate-terminated prepolymer (A2), or
b) are reacted with an NCO-containing precursor of the prepolymer (A) to give a silyl-containing precursor, which is then reacted in further reaction steps to give the completed prepolymer (A).

9. Process according to claim 8, in which the proportions of the individual components are selected such that all of the isocyanate groups present in the reaction mixture are consumed by reaction.

10. Mixtures (M) comprising the prepolymers (A) in accordance with claim 1 to 7 and further components.

## Revendications

1. Prépolymères (A) à fonctionnalité alcoxysilane, pouvant être obtenus par l'utilisation d'un alcoxysilane (A1) à fonctionnalité aminométhyle, qui dispose d'au moins un élément de structure de formule générale [1] 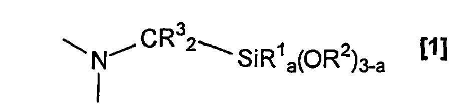 dans laquelle
R¹ représente un radical hydrocarboné le cas échéant substitué ou un groupe =N-CR³₂,
R² représente un radical alkyle comprenant 1-6 atomes de carbone ou un radical ω-oxaalkylalkyle comprenant au total 2-10 atomes de carbone,
R³ représente hydrogène ou un radical hydrocarboné le cas échéant substitué et
a peut valoir 0, 1 ou 2,
où il s'agit, pour l'atome d'azote dans la formule générale [1], d'un atome d'azote tertiaire et l'alcoxysilane (A1) dispose d'au moins une autre fonction (F) réactive par rapport aux isocyanates.

2. Prépolymères (A) à fonctionnalité alcoxysilane, dans lesquels les radicaux R¹ présentent 1 à 12 atomes de carbone.

3. Prépolymères (A) à fonctionnalité alcoxysilane selon la revendication 1 et 2, dans lesquels les radicaux R² représentent des groupes méthyle ou éthyle.

4. Prépolymères à fonctionnalité alcoxysilane (A) selon la revendication 1 à 3, dans lesquels la fonction (F) est choisie parmi la fonction NH, OH ou SH.

5. Prépolymères à fonctionnalité alcoxysilane (A) selon la revendication 1 à 4, dans lesquels les alcoxysilanes (A1) correspondent à la formule générale [2] ou [3] 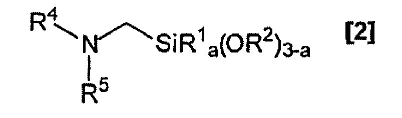 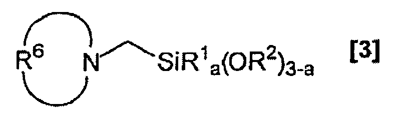 où
R⁴ représente un radical alkyle, aryle ou arylalkyle le cas échéant substitué, qui dispose d'au moins un groupe carboxyle, carbonyle ou un groupe OH, SH ou NHR⁷ réactif par rapport aux isocyanates, la chaîne alkyle pouvant le cas échéant être interrompue par de l'oxygène, des groupes carbonyle, du soufre ou des groupes NR⁷,
R⁵ représente un radical alkyle, aryle ou arylalkyle le cas échéant substitué, la chaîne alkyle pouvant le cas échéant être interrompue par de l'oxygène, des groupes carbonyle, du soufre ou des groupes NR⁷, ou un radical R⁴,
R⁶ représente un radical alkyle ou arylalkyle difonctionnel le cas échéant substitué, qui soit dispose dans la chaîne alkyle d'un groupe carbonyle ou d'une fonction NH réactive par rapport aux isocyanates ou d'une fonction NR⁴ soit est substitué par au moins un groupe OH, SH ou NHR⁷ réactif par rapport aux isocyanates, la chaîne alkyle pouvant le cas échéant être interrompue par de l'oxygène, du soufre, des groupes NR⁷ ou des groupes carbonyle,
R⁷ représente hydrogène ou un radical alkyle, aryle ou arylalkyle le cas échéant substitué, et
R¹, R² et a présentent les significations indiquées dans la formule générale [1] selon la revendication 1.

6. Prépolymères à fonctionnalité alcoxysilane (A) selon la revendication 1 à 5, dans lesquels les alcoxysilanes (A1) correspondent à la formule générale [4] 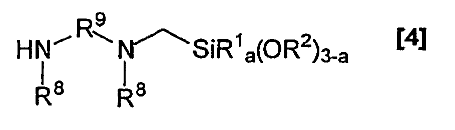 où
R⁸ signifie un radical alkyle comprenant 1-4 atomes de carbone, et
R⁹ signifie un radical alkyle difonctionnel comprenant 2-10 atomes de carbone, et
R¹, R² et a présentent les significations indiquées dans la formule générale [1] selon la revendication 1.

7. Prépolymères à fonctionnalité alcoxysilane (A) selon la revendication 1 à 4, dans lesquels les alcoxysilanes (A1) correspondent à la formule générale [5] ou [6] 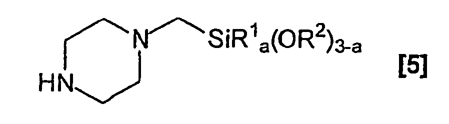 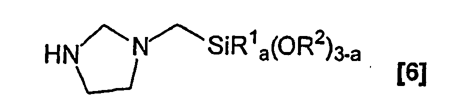 où
R¹, R² et a présentent les significations indiquées dans la formule générale [1] selon la revendication 1.

8. Procédé pour la préparation des prépolymères à fonctionnalité alcoxysilane (A) selon la revendication 1 à 7, dans lequel un ou plusieurs silanes de formule générale [1] à [6] selon les revendications 1 et 5 à 7
a) sont transformés avec un prépolymère terminé par isocyanate (A2), ou
b) sont transformés avec un précurseur contenant des groupes NCO du prépolymère (A) en un précurseur contenant des groupes silyle, qui est alors transformé dans d'autres étapes de réaction en prépolymère (A) fini.

9. Procédé selon la revendication 8, dans lequel les rapports de quantités des différents composants sont choisis de manière telle que la totalité des groupes isocyanate présents dans le mélange réactionnel réagissent.

10. Mélanges (M), contenant les prépolymères (A) selon la revendication 1 à 7 et d'autres composants.
